# EUROPEAN PATENT APPLICATION

(11) **EP 3 578 132 A1**
(43) Date of publication of application: **11.12.2019**
(21) Application number: 18176389.7
(22) Date of filing: 07.06.2018
(51) Int. Cl.: A61C 8/00

(54) **IMPLANT DEVICE**

(71) Applicant: Taiwan Shan Yin International Co., Ltd., Kaohsiung City 806 (TW); Biomate Medical Devices Technology Co., Ltd., 821 Kaohsiung City (TW)
(72) Inventor: Su, Kou-Tsair, 806 Kaohsiung City (TW); Su, Yu-Jung, 806 Kaohsiung City (TW)
(74) Representative: Cabinet Chaillot

(57) **Abstract**

An implant device (3) includes an implant (31) with a threaded portion (313) and a drilling portion (311) and a positioning hole (312) respectively formed at two ends (E1, E2) of the implant (31). Pores (32) are recessed into a surface portion (S) of the implant (31). Each pore (32) has a peripheral wall (321) . The peripheral wall (321) and the surface portion (S) meet an end edge. Adjacent end edges (322) and peripheral walls (321) are joined to cause adjacent pores (32) to communicate one after another, thereby forming communicating channels (323). When the implant (31) is fastened to a target part (5), cells (BC) derived from the target part are quickly attached to the end edges (322) and enter the channels (323) to attain a smooth adhesion and proliferation. The proliferated cells (BC) climb between the pores (32) and channels (323) and become linked to hold the implant (31) firmly and enhance the combination between the implant (31) and the target part (5), thereby shortening the convalescence period of the target part (5).

## Description

### BACKGROUND OF THIS INVENTION

### 1. Field of this invention

This invention relates to an implant device and relates particularly to an implant which benefits the proliferation of cells and speeds up the process of healing the implanted part.

### 2. Description of the Related Art

An implant device is widely applied. Particularly, it is commonly used in the dental field and orthopedics, and herein the implant device applied to the dental implantology is taken as an example. It is known to fix a metal implant to the alveolar bone in the oral cavity for treating missing or broken teeth. After the implant is implanted into the alveolar bone, bone cells derived from the bone need to combine with the implant to attain an osseointegration effect. Generally, the implant has a porous structure whereby the cells are attached to the porous structure to combine with the implant. However, traditional pores are usually spaced apart at different distances and are different in size and depth. This traditional design takes lots of time to complete the osseointegration because reborn cells of the alveolar bone are too small to climb between the pores and it takes the cells lots of time to grow and increase in size. The bone cells cannot climb between the adjacent pores until they grow up to have a size sufficient to climb between the pores and link. This causes a long period of osseointegration and thus the bone tissue requires a long convalescence period. Therefore, the traditional design needs improvement.

### SUMMARY OF THIS INVENTION

An object of this invention is to provide an implant device which allows cells to be quickly and smoothly attached to the implant and promotes the growth of cells, thereby attaining a stable combination between the implant and the target part and shortening the convalescence period of the tissue of the target part.

An implant device of this invention includes an implant having a first end and a second end opposite to the first end, wherein the implant includes a drilling portion disposed at the first end, a positioning hole formed at the second end, and a threaded portion spirally disposed between the first end and the second end. A plurality of pores are recessedly formed into a surface portion of the implant. The surface portion includes a shank surface exposed when adjacent threads of the threaded portion are axially spaced apart. Each pore has a peripheral wall. The peripheral wall and the surface portion meet at an end edge. Adjacent end edges and peripheral walls of the plurality of adjacent pores are joined to each other. This allows the adjacent pores to communicate one after another in a row and thus define a channel. The rows of the communicating pores define a plurality of channels. Accordingly, when the implant device is fastened to a target part, reborn cells of the target part grip the end edges of the pores easily and enter each channel caused by the joined pores for adhering, growing and proliferating quickly. The proliferated cells further stretch out of the pores and channels to be continuously attached to other pores and channels, and then the cells link together to combine with the implant in a short time. The above action allows the entire implant to be wrapped by the linked cells and held in position. Therefore, the combination between the implant and the target part is promoted to prevent the loosening of the implant and shorten the convalescence period of the tissue of the target part.

Preferably, each end edge has a non-smooth border to benefit the adhesion of cells.

Preferably, in one preferred embodiment, only the shank surface is provided with the pores. In other preferred embodiment, not only the shank surface but also a thread surface of partial or all threads of the threaded portion can be provided with the pores.

Preferably, the threaded portion includes at least two thread sections with respective thread pitches formed between any two adjacent threads of respective thread sections. The thread pitches are different from each other. Further, a second maximum outer diameter of the second end can be larger than a first maximum outer diameter of the first end to facilitate a rapid drilling action.

Preferably, the end edges of the pores are joined in a lateral row to form a laterally-communicating and independent channel. Alternatively, the end edges are axially joined to form a longitudinal and independent channel. Alternatively, the end edges are joined in both directions to allow adjacent channels to communicate with each other, thereby forming a mutual communication between the channels.

### BRIEF DESCRIPTION OF THE DRAWINGS

Fig. 1 is a schematic view showing a first preferred embodiment of this invention;
Fig. 2 is a schematic view showing a second preferred embodiment of this invention;
Fig. 3 is a schematic view showing a third preferred embodiment of this invention;
Figs. 4A to 4H are schematic views showing alternative embodiments of the communication of the pores, wherein Figs. 4A and 4B are enlarged view to show the alternative embodiments of the part circled in Fig. 1; Figs. 4C, 4D and 4G are enlarged view to show the alternative embodiments of the part circled in Fig. 2; Figs. 4E, 4F and 4H are enlarged view to show the alternative embodiments of the part circled in Fig. 3;
Figs. 5A to 5C are plan views showing alternative embodiments of the communicating arrangements of the channels caused by rows of communicating pores;
Fig. 6 is a perspective view of Fig. 5A; and
Figs. 7 to 9 are schematic views showing the implant device of this invention applied to the dental implanting surgery.

### DETAILED DESCRIPTION OF THE PREFERRED EMBODIMENTS

An implant device **3** of this invention can be mainly applied to medical implanting field. It can be fastened to a target part where the proliferation of cells is required in the field of dentistry, orthopedics and the like. For example, it may serve as an artificial implant implanted into an alveolar bone of the oral cavity. It may serve as a fixture like an artificial screw used in the orthopedic surgery. In the preferred embodiments of this invention, it is taken as an example that the target part is the alveolar bone in the oral cavity, and the implant device **3** is a root implant implanted into the alveolar bone.

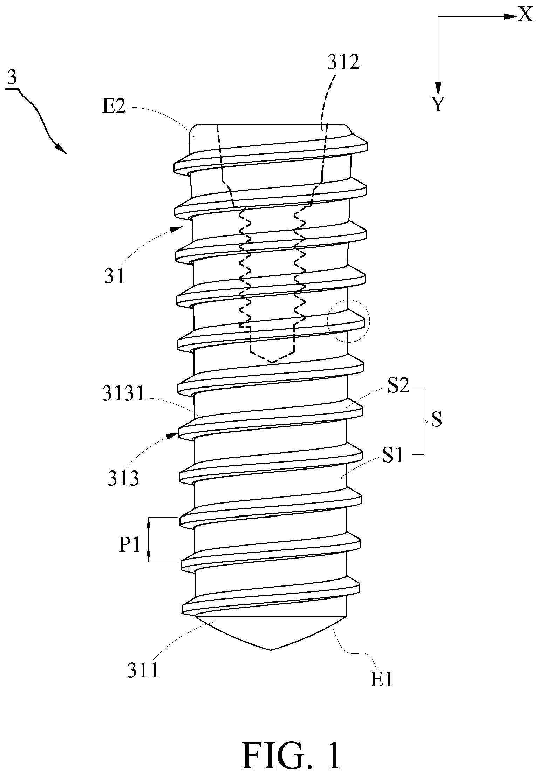

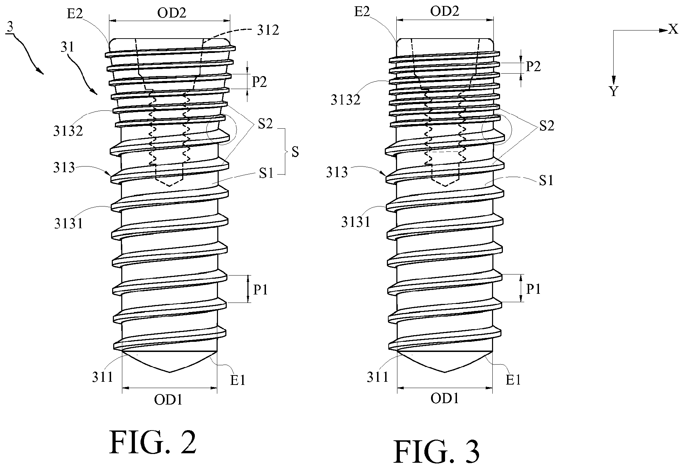

Referring to Fig. **1****,** an implant device **3** of this invention includes an implant 31, a drilling portion **311** and a positioning hole **312** formed opposite to the drilling portion **311.** Specifically, the implant **31** defines a first end **E1** and a second end **E2** opposite to the first end **E1.** The drilling portion **311** is disposed at the first end **E1.** The positioning hole **312** is formed at the second end **E2,** opposite to the drilling portion **311.** The implant **31** further has a threaded portion **313** spirally disposed between the two ends **E1, E2.** The threaded portion **313** can include a single-convoluted thread section **3131** extending from the first end **E1** to the second end **E2** and defining a thread pitch **P1** between any two adjacent threads of the thread section **3131** (shown in Fig. **1**) . Alternatively, the threaded portion **313** includes at least two thread sections **3131, 3132** (shown in Figs. **2**-**3**), and two thread sections are taken as an example in the preferred embodiments. As shown in the figures, a first thread section **3131** spirally extends from the first end **E1** of the implant **31,** and a second thread section **3132** extends from the first thread section **3131** to the second end **E2.** A thread pitch **P1** is defined between any two adjacent threads of the thread section **3131.** Between any two adjacent threads of the second thread section **3132** is defined a thread pitch P2 which can be different from the thread pitch **P1**, and herein the thread pitch **P1** of the first thread section **3131** is preferably larger than the thread pitch **P2** of the second thread section **3132.** Furthermore, the second end **E2** has a second maximum outer diameter **OD2** which can be equal to (Fig. **3**) or larger than (Fig. **2**) a first maximum outer diameter **OD1** of the first end **E1.** When the diameter **OD2** is larger than the diameter **OD1,** the diameter of the part of the implant **31** where the second thread section **3132** is located progressively increases to allow a thread diameter of the second thread section **3132** to gradually increase in a direction opposite to the drilling portion **311** and flare radially outward. This helps a rapid and stable fastening effect.

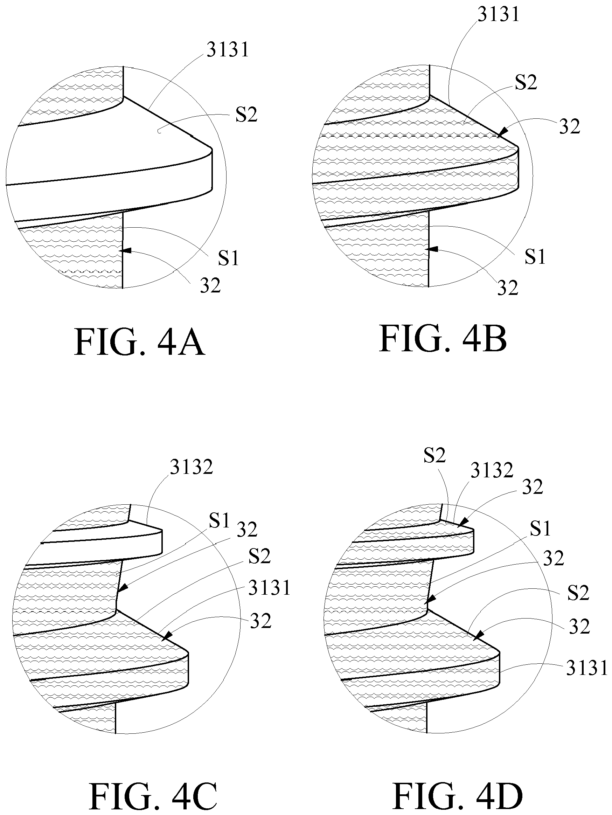

There are pores **32** recessed into a surface portion **S** of the implant **31.** The size and the shape of the pores **32** are not limited. The surface portion **S** includes any exposed surfaces of the implant **31**. For example, the surface portion **S** can include a shank surface **S1**. The shank surface **S1** is an outer surface extending axially from the first end **E1** to the second end **E2** and is exposed to an outside. Any two adjacent threads of the threaded portion **313** are axially spaced apart to expose the outer surface. It is also possible that the surface portion **S** includes the shank surface **S1** and a thread surface **S2** of all or part of threads of the threaded portion **313.** Accordingly, partial or all exposed parts of the implant **31** can be provided with the pores **32.** For instance, regarding a single convolution shown in Fig. **1**, adjacent threads of the threaded portion **3131** are axially spaced apart to expose the shank surface **S1,** and pores **32** are formed within the shank surface **S1** (shown in Fig. **4A****)** . Alternatively, the shank surface **S1** and any thread surface **S2** of the threads of the thread section **3131,** such as an upper flank face, a lower flank face and both flank faces, are provided with the pores **32,** as shown in Fig. **4B****.**

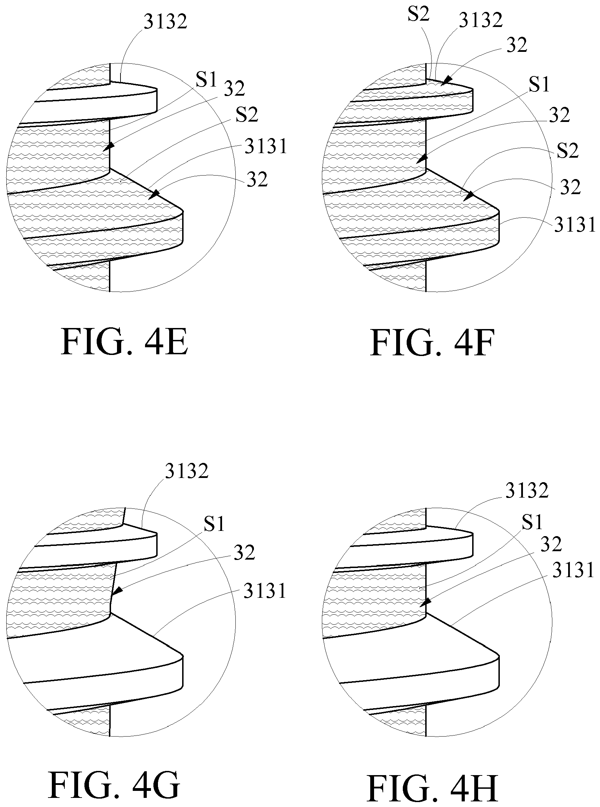

Regarding the structure with two convolutions shown in Figs. **2-3****,** adjacent threads of the threaded portions **3131, 3132** are axially spaced apart to expose the shank surface **S1,** and pores **32** are formed within the shank surface **S1** (shown in Figs. **4G** and **4H**). It is also possible that the shank surface **S1** and any thread surface **S2** of the threads of the thread section **3131** are provided with the pores **32** (shown in Figs. **4C** and **4E**). Alternatively, the shank surface **S1** and any thread surface **S2** of the threads of the thread sections **3131, 3132,** such as an upper flank face, a lower flank face and both flank faces, are provided with the pores **32** (shown in Figs. **4D** and **4F**).

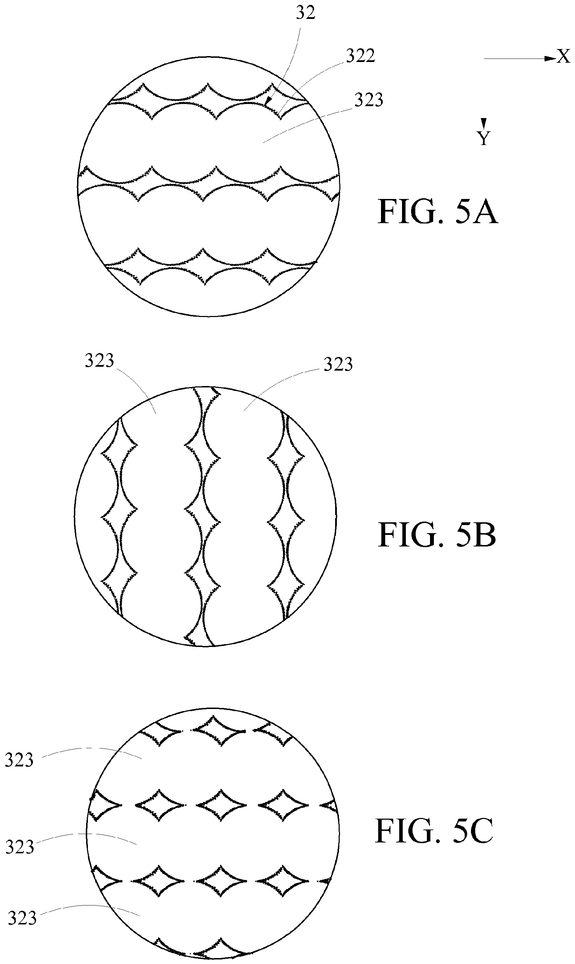

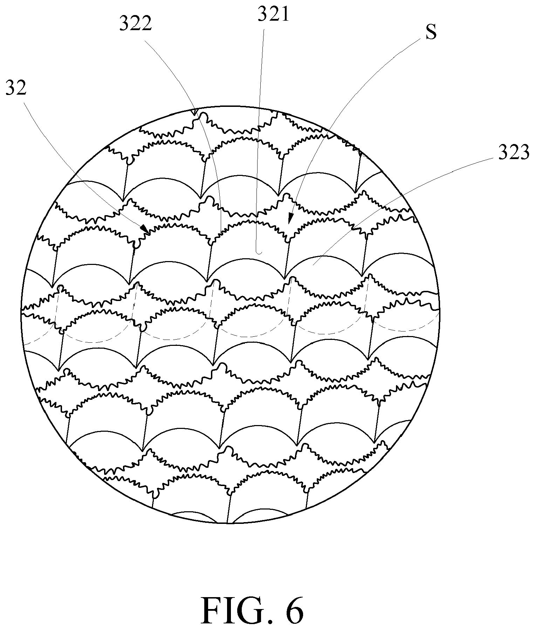

Referring to Fig. **6****,** each pore **32** has a peripheral wall **321.** The peripheral wall **321** is a wall extending from the surface portion S toward the interior of the implant **31,** and the pore **32** is enclosed by the peripheral wall **321.** The peripheral wall **321** and the surface portion **S** meet at an end edge **322.** Adjacent end edges **322** of the adjacent pores **32** are joined to allow the adjacent peripheral walls **321** to connect with each other. Therefore, one pore **32** is open to the next pore **32,** and adjacent pores **32** communicate one after another to define a channel **323.** By rows of the communicating pores **32,** the implant **32** forms plurality of channels **323.** Various communicating arrangements of the channels **323** are shown in Figs. **5A-5C** and will be described in detail. For the sake of concision, Fig. **6** only illustrates a perspective view of the arrangement shown in Fig. **5A****,** and Figs. **4A****-4H** only show that the pores **32** are formed in the communicating state shown in Fig. **5A****.** Preferably, the end edge **322** of each pore **32** is provided with a non-smooth border. For example, the place where the peripheral wall **321** touches the surface portion **S** forms a notched or tooth-like line, which causes the end edge **322** to become uneven. The uneven end edge **322** is taken as an example for the operation.

The joining direction of the pores **32** decides the communicating arrangement of each channel **323.** For example, the pores **32** are joined around the surface portion **S** in a lateral direction **X** (as shown), so the channels **323** each are independently formed in a lateral communication to provide a lateral communicating space, shown in Fig. **5A** and Fig. **6**. Alternatively, the pores **32** are joined in a longitudinal or axial direction **Y** (as shown), so the channels **32** each are independently formed in a longitudinal communication to provide a longitudinal communicating space (shown in Fig. **5B**). Alternatively, the pores **32** are joined in both directions **X** and **Y** to interlink adjacent channels **323** whereby a mutual communication is formed between the channels to provide both of longitudinal and lateral communicating spaces (shown in Fig. **5C****).** The above communicating types allow cells to be evenly and regularly distributed during the process of adhesion and proliferation and assist the cells in linking together to wrap and fix the entire implant **31** firmly. The arrangement of Fig. **5A** is taken as an example for the operation.

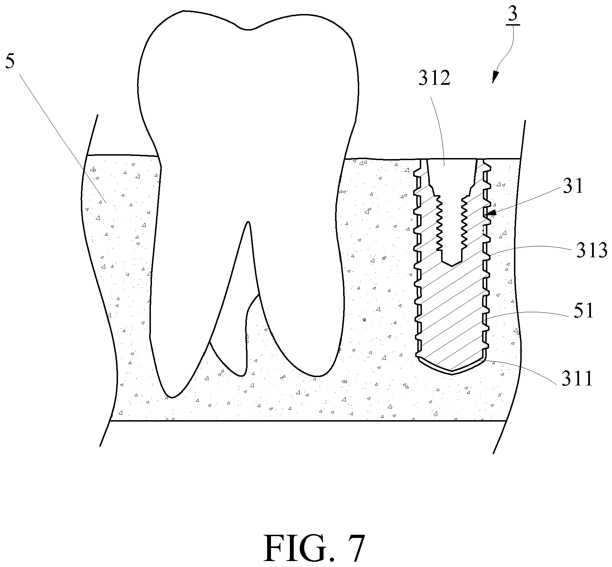

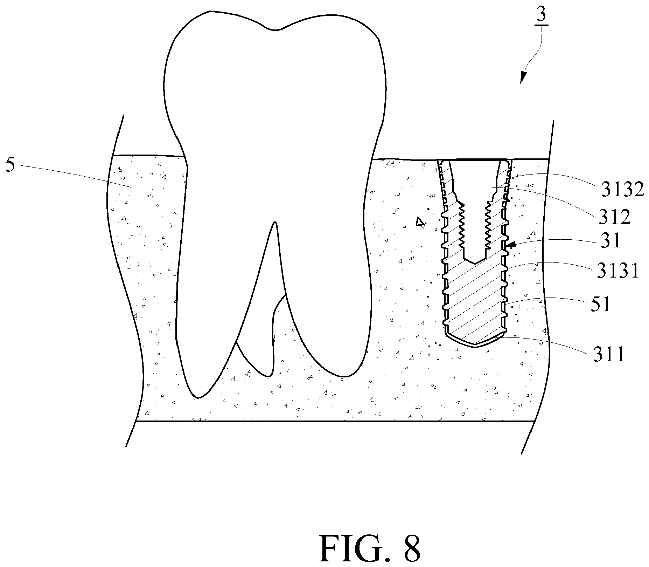

The operation of this invention is described with the aid of Fig. **7****.** The implant device **3** is used as a fixture implanted into an alveolar bone **5** in the oral cavity. To start an implanting operation, a surgical tool (not shown) is inserted into the positioning hole **312** and rotates to cause the threaded portion **313** to cut an inner wall of a predrilled hole **51** of the alveolar bone **5** and fasten in position. As shown in Fig. **8****,** if the implant **31** provides two thread sections **3131, 3132,** the first thread section **3131** with a larger pitch **P1** has a large contact area to cut the inner wall and screw into the hole **51.** The second thread section **3132** with a smaller pitch **P2** follows the screwing tracks of the first thread section **3131** to continue the cutting and screwing action. This design attains a quick fastening action, helps relieve discomfort of patients during the implanting operation, and attains a stable positioning effect.

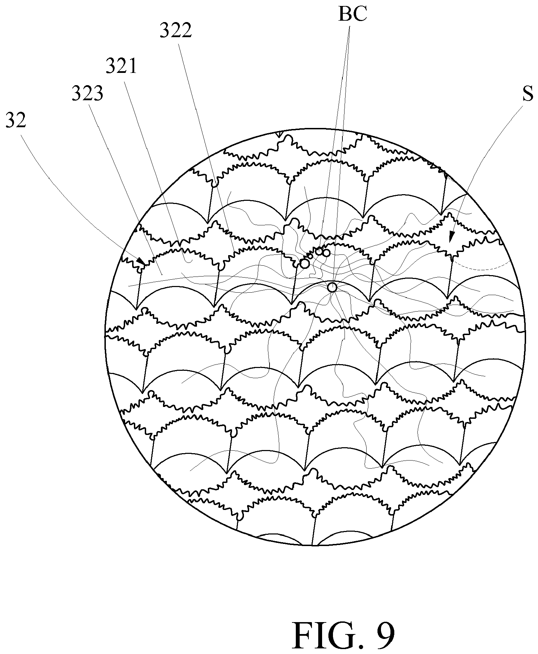

After the implant **31** is implanted into the alveolar bone **5,** bone cells **BC,** as briefly shown in Fig. **9****,** are derived from the bone **5** during the process of convalescing. The end edges **322** of the pores **32** has an uneven or non-smooth border, so the cells **BC** grip the end edges **322** quickly and smoothly to enter the pores **32** and then execute the adhesion and proliferation inside and outside the pores **32.** Specifically, after the cells **BC** go into the pores **32** along the end edges **322** and become attached, the cells **BC** are quickly adhered to the peripheral walls **322** in the channels **323** and execute the cell proliferation as a result of cell growth and cell division. Because an inner communicating space is formed through each channel **323,** the proliferated cells or accretions **BC** climb and stretch along the peripheral walls **322** continuously and distribute over each channel **323.** Then, the cells **BC** project from the respective channels **323** and pores **32** and grow along the surface portion **S** like a creeping or climbing plant to attach other channels **323** and pores **32** for adhesion. Finally, the cells **BC** link with each other and wrap the entire implant **31** to fix the implant **31** to the alveolar bone **5** firmly and prevent it from loosening. This increases the osseointegration between the implant **31** and the alveolar bone **5.**

Therefore, the communicating pores **32** or the cooperation between the communicating pores **32** and the uneven end edges **322** allow the bone cells **BC** to be smoothly and quickly attached to the end edges **322** and the pores **32** to increase the initial adhesion and growth of cells **BC.** The cells **BC** are continuously adhered to the channels **323** for growing, stretching and distributing quickly and evenly. The inner communicating space of each channel **323** provides a wide contact area for the adherence and growth of osteocytes. Namely, the contact surface area between the implant **31** and the cells **BC** is increased, so the cell adhesion and growth ability can be efficiently increased to assist cells **BC** in executing the rapid and smooth adhesion, proliferation and close linking action. Thus, the osseointegration effect is enhanced to speed up the process of healing the osseous tissue of the alveolar bone, which helps shorten the convalescence period.

To sum up, this invention mainly includes pores recessedly formed into the surface portion of the implant and channels formed by joining adjacent end edges of adjacent pores. Accordingly, cells obtained from the target part where the implant is fastened are attached to the pores smoothly and go into each channel for quick adhesion, distribution and proliferation. Proliferated cells or accretions further link with each other between pores and channels. Therefore, it takes the cells less time to be adhered to the implant, and the entire implant is wrapped by the cells and held in position firmly to increase the combination effect between the implant and the target part, prevent the implant from loosening, and heal the target part quickly.

While the embodiments of this invention are shown and described, it is understood that further variations and modifications may be made without departing from the scope of this invention.

## Claims

1. An implant device (3) comprising an implant (31) having a first end (El) and a second end (E2) opposite to said first end (El), wherein said implant (31) includes a drilling portion (311) disposed at said first end (El), a positioning hole (312) formed at said second end (E2), and a threaded portion (313) spirally disposed between said first end (El) and said second end (E2);
**characterised in that** a plurality of pores (32) are recessedly formed into a surface portion (S) of said implant (31), said surface portion (S) including a shank surface (Sl) exposed when adjacent threads of said threaded portion (313) are axially spaced apart, each of said plurality of pores (32) having a peripheral wall (321), said peripheral wall (321) and said surface portion (S) meeting at an end edge (322), adjacent end edges (322) and peripheral walls (321) of said plurality of adjacent pores (32) being joined to each other to allow said adjacent pores (32) to communicate one after another in a row and thus define a channel (323), rows of said communicating pores (32) defining a plurality of channels (323).

2. The implant device (3) according to claim 1, wherein each end edge (322) of each of said pores (32) is provided with a non-smooth border.

3. The implant device (3) according to claim 1, wherein said surface portion (S) further includes a thread surface (S2) of said threads of said threaded portion (313).

4. The implant device (3) according to any of claims 1 to 3, wherein said threaded portion (313) includes at least two thread sections (3131, 3132), respective thread pitches (P1, P2) being formed between any two adjacent threads of respective thread sections (3131, 3132), said thread pitches (P1, P2) being different from each other.

5. The implant device (3) according to claim 4, wherein said second end (E2) has a second maximum outer diameter (OD2) larger than a first maximum outer diameter (OD1) of said first end (El).

6. The implant device (3) according to claim 1 or 2, wherein said end edges (322) of said pores (32) are joined in a lateral direction to allow each channel (323) to be independently formed in a lateral communication.

7. The implant device (3) according to claim 1 or 2, wherein said end edges (322) of said pores (32) are joined in a longitudinal direction to allow each channel (323) to be independently formed in a longitudinal communication.

8. The implant device (3) according to claim 1 or 2, wherein said end edges (322) of said pores (32) are laterally and longitudinally joined to interlink adjacent channels (323) whereby a mutual communication is formed.
